# EUROPÄISCHE PATENTANMELDUNG

(11) **EP 0 638 871 A2**
(43) Veröffentlichungstag der Anmeldung: **15.02.1995**
(21) Anmeldenummer: 94112007.3
(22) Anmeldetag: 01.08.1994
(51) Int. Cl.: G06K 1/00, G01S 13/82

(54) **Vorrichtung zum Erfassen und Auslesen von relativ zu dieser Vorrichtung beweglichen Transpondern**

(30) Priorität: 05.08.1993 DE 4326263; 28.10.1993 DE 4336799; 23.11.1993 DE 4339669
(71) Anmelder: Alcatel SEL Aktiengesellschaft, D-70435 Stuttgart (DE); ALCATEL N.V., NL-1077 XX Amsterdam (NL)
(72) Erfinder: Höfgen, Günter, Dr., D-70806 Kornwestheim (DE)
(74) Vertreter: Pechhold, Eberhard, Dipl.-Phys.

(57) **Zusammenfassung**

Es wird eine Vorrichtung zum Erfassen und Auslesen von relativ zu dieser Vorrichtung beweglichen, Information tragenden Transpondern (T) angegeben, die auszulesende Transponder hinsichtlich ihrer Entfernung selektiert und damit von Reflexionen oder unerwünschten Transponderantworten aus näher oder weiter entfernt gelegenen Entfernungszonen nicht gestört wird. Zwei Phasenmodulatoren (PM1, PM2), von denen einer im Sendezweig, der andere im Empfangszweig der Lesevorrichtung angeordnet ist, werden mit demselben Pseudo-Zufalls-Code angesteuert, der zweite Phasenmodulator jedoch zeitverzögert. Sie bilden ein Laufzeitfilter, d.h. von einem Transponder oder anderen Gegenständen reflektierte Empfangssignale werden nur ausgewertet, wenn die Summe der Laufzeiten des ausgesendeten HF-Signals und des zurück zur Lesevorrichtung reflektierten Signals etwa gleich der Verzögerung des dem zweiten Phasenmodulator zugeführten Modulationssignals ist. Zur weiteren Sicherung gegenüber einer Auswertung von Transponderinformation aus benachbarten Entfernungszonen können zusätzliche Laufzeitfilter für diese benachbarten Entfernungszonen vorgesehen sein und die Auswertung nur für den Fall vorgenommen werden, daß kein Antwortsignal aus einer der benachbarten Entfernungszonen mit höherem Pegel empfangen wird. Die Vorrichtung kann stationär zum Auslesen von mit beweglichen Objekten verbundenen Transpondern oder mobil, z.B. auf Zügen zum Auslesen fester Streckenmarken eingesetzt werden. Werden Transponder eingesetzt, die das rückgestrahlte Signal in seiner Frequenz verschieben, können störende Reflexionen der Abfragefrequenz ausgeblendet werden.

## Beschreibung

Die Erfindung betrifft eine Vorrichtung gemäß dem Oberbegriff des Patentanspruchs 1.

Eine derartige Vorrichtung ist z.B. aus der US-Patentschrift Nr. 4,739,328 bekannt. Sie dient zum Auslesen von kartenförmigen Transpondern, sogenannten TAGS, die z.B. an Tieren, an Fahrzeugen oder an Containern befestigt sind und diesen Objekten zugeordnete Daten codiert enthalten.

Die bekannte Lesevorrichtung strahlt ein Hochfrequenzsignal von z.B. 915 MHz als Dauerstrichsignal in Richtung des auszulesenden Transponders ab. Der Transponder, der auf die ausgestrahlte Hochfrequenz abgestimmt ist, reflektiert einen Teil der aufgenommenen Hochfrequenzleistung zur Lesevorrichtung zurück, wobei er mit Hilfe eines Modulators, der von einem Datenspeicher angesteuert wird, das rückgestrahlte Signal entsprechend den im Datenspeicher abgelegten Daten moduliert.

In der Lesevorrichtung wird das zurückgestrahlte Hochfrequenzsignal kohärent demoduliert und der vom Transponder aufmodulierte Code von einer Auswerteeinheit ausgewertet.

Die aus der US-Patentschrift bekannte Lesevorrichtung empfängt alle Signale, deren Frequenz im Bereich der ausgestrahlten Hochfrequenz liegt. Derartige Signale liefern nicht nur alle von der ausgestrahlten Hochfrequenz erreichten Gegenstände aus Metall oder anderem leitfähigen Material, sondern auch andere Transponder, die sich z. B. weiter entfernt von der Lesevorrichtung befinden und eigentlich nicht abgefragt werden sollen. Die Lesevorrichtung nimmt somit viele unnötige Signale auf, die unerwünscht sind, weil sie den Empfang und die Auswertung von Nutzsignalen stören können.

Aus der DE-OS 26 12 996 ist eine ähnliche Vorrichtung bekannt, die für die Auswertung von Rückstrahlsignalen von Transpondern (Registriersendern) geeignet ist, die gegenüber dem Abfragesignal in ihrer Frequenz verschoben sind. Durch die von den Transpondern vorgenommene Frequenzverschiebung wird die Möglichkeit geschaffen, Transpondersignale von Reflexionen passiver Gegenstände unterscheiden zu können und damit störenden Hintergrund auszublenden. Jedoch auch mit dieser Vorrichtung läßt sich nicht vermeiden, daß bei Anwesenheit mehrerer Transponder auch Rückstrahlsignale von weiter entfernt liegenden Transpondern empfangen werden und somit die Gefahr besteht, daß der Empfang von Signalen eines auszulesenden Transponders gestört wird oder daß Signale eines falschen Transponders ausgewertet werden.

Aufgabe der Erfindung ist deshalb eine Vorrichtung der eingangs beschriebenen Art, die ein weitgehend ungestörtes Auslesen einzelner Transponder erlaubt.

Diese Aufgabe wird durch die im kennzeichnenden Teil des Patentanspruchs 1 angegebenen Merkmale gelöst.

Durch die Einfügung eines Laufzeitfilters, wie es z. B. aus der Radartechnik zur Entfernungsmessung bekannt ist, wird hier ein Entfernungstor geschaffen, das solche Signale beim Empfang ausblendet, die von Objekten oder Transpondern stammen, die von der Lesevorrichtung weiter oder weniger weit entfernt sind als der auszulesende Transponder.

Ausgestaltungen der Vorrichtung nach der Erfindung sind in den Unteransprüchen angegeben.

So betrifft Patentanspruch 2 die Realisierung eines Laufzeitfilters mittels zweier Phasenmodulatoren, die das ausgestrahlte Hochfrequenzsignal (Abfragesignal) und das rückgestrahlte Signal (Empfangssignal) zeitlich gegeneinander versetzt entsprechend einem charakteristischen Code in der Phase zwischen 0° und 180° umtasten, so daß bei Übereinstimmung des zeitlichen Versatzes mit der zwischen Lesevorrichtung und Transponder benötigten Signallaufzeit die dem Empfangssignal aufgeprägte Phasenmodulation verschwindet und das Empfangssignal in einem Hochfrequenzmischer kohärent demoduliert werden kann. Dem Empfangssignal niederfrequent aufmodulierte Daten können dann über ein Tiefpaßfilter der Auswertung zugeführt werden.

An leitfähigen, das Abfragesignal nicht modulierenden Objekten reflektierte Empfangssignale, die am Ausgang des Hochfrequenzmischers ein statisches oder ein aufgrund von Dopplerverschiebung niederfrequent moduliertes Signal hervorrufen, können, gemäß Anspruch 3, über den Tiefpaß einer Anzeigeeinrichtung zugeführt werden. Auf diese Weise können, z.B. bei der Fahrzeugregistrierung, auch Fahrzeuge, die keinen Transponder tragen, erfaßt werden.

Patentanspruch 4 sieht weitere Laufzeitfilter vor, deren im Empfangszweig angeordnete Phasenmodulatoren den charakteristischen Code mit Zeitverzögerungen erhalten, die Signallaufzeiten entsprechen, wie sie bei der Abfrage von näher oder weiter entfernt als der auszulesende Transponder liegenden Transpondern zu erwarten wären. Wird die Auswertung der ausgelesenen Information für den Fall verhindert, daß aus einem näher liegenden oder weiter entfernt liegenden Entfernungsbereich ein Empfangssignal eintrifft, dessen niederfrequenter, von einem Transponder aufmodulierter Signalanteil einen hohen Pegel aufweist, so wird dadurch die Sicherheit der Informationsübertragung erheblich erhöht. Es kann dann, z. B. bei Einsatz der Vorrichtung zur Übertragung von Streckeninformation auf Eisenbahnfahrzeuge, sicher verhindert werden, daß bei Ausfall eines streckenseitigen Transponders fälschlicherweise ein an einem Nachbargleis befindlicher Transponder ausgelesen und somit falsche Information aufgenommen wird.

Gegenstand der Patentansprüche 5 und 6 ist ein als Modulationssignal für die Phasenmodulatoren geeigneter charakteristischer Code, während die Patentansprüche 7 bis 9 vorteilhafte Ausgestaltungen der Schaltung der Auslesevorrichtung betreffen.

Die Ansprüche 10 und 11 betreffen Ausgestaltungen der Vorrichtung nach der Erfindung, die zum Empfang und zur Auswertung von Transpondersignalen geeignet sind, die in ihrer Frequenz gegenüber dem Abfragesignal verschoben sind.

Hierbei betrifft Anspruch 10 eine Vorrichtung mit einem Phasenmodulator, Anspruch 11 eine Vorrichtung mit zwei oder mehreren Phasenmodulatoren.

Die unabhängigen Patentansprüche 12 und 13 beziehen sich auf die Verwendung der Vorrichtung nach der Erfindung zur Erfassung von Daten bzw. zur Übertragung von Streckeninformation auf spurgebundene Fahrzeuge.

Anhand von vier Figuren sollen nun Ausführungsbeispiele der Vorrichtung nach der Erfindung beschrieben und die Funktion der Vorrichtung erklärt werden.
- Fig. 1: zeigt ein Blockschaltbild einer Lesevorrichtung nach dem Stand der Technik,
- Fig. 2: zeigt eine Vorrichtung nach der Erfindung
- Fig. 3: zeigt schematisch den Pegelverlauf der Ausgangssignale zweier, Entfernungstore bildender Laufzeitfilter in Abhängigkeit des Abstandes zwischen Auslesevorrichtung und auszulesendem Transponder.
- Fig. 4: zeigt eine Vorrichtung nach der Erfindung, die sich zum Empfang und zur Auswertung frequenzverschobener Transpondersignale eignet.

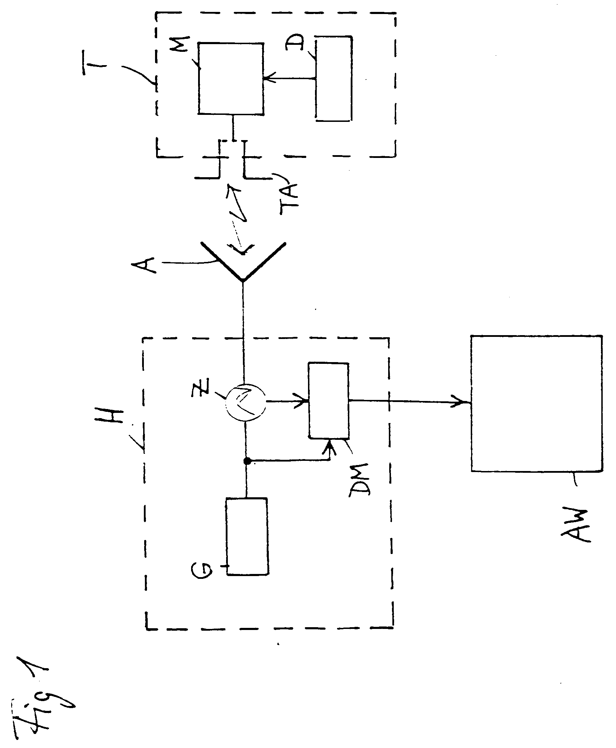

In Fig. 1 sind ein HF-Modul H, eine Auswerteeinheit AW, eine Antenne A sowie ein Transponder T dargestellt. Letzterer enthält einen Datenspeicher D, einen Modulator M und eine Sende-Empfangsantenne TA.

Im HF-Modul erzeugt ein Hochfrequenzgenerator G eine Hochfrequenz im Bereich von 2,5 GHz, die über einen Zirkulator Z der Antenne A zugeführt und von dieser als Abfragesignal in Richtung auf den Transponder zu abgestrahlt wird.

Der Transponder ist auf die Frequenz des Abfragesignals abgestimmt und reflektiert einen Teil der über seine Antenne TA aufgenommenen HF-Leistung zur Antenne A der Lesevorrichtung zurück. Das Reflexionsvermögen des Transponders läßt sich durch den Modulator M entsprechend einem im Datenspeicher D abgelegten Code verändern, so daß das reflektierte Signal mit dem Transpondercode, der z.B. Daten über ein den Transponder tragendes Objekt enthalten kann, moduliert ist.

Das reflektierte Signal wird im HF-Modul mittels des Zirkulators Z vom Abfragesignal getrennt und als Empfangssignal einem Demodulator DM zugeführt, der es, mit der Abfragesignalfrequenz als Referenzsignal, kohärent demoduliert und der Auswerteeinheit zuführt. Die Auswerteeinheit AW decodiert die vom Transponder übertragene Modulation und veranlaßt die Verarbeitung oder Weiterleitung der enthaltenen, aus dem Transponder ausgelesenen Information.

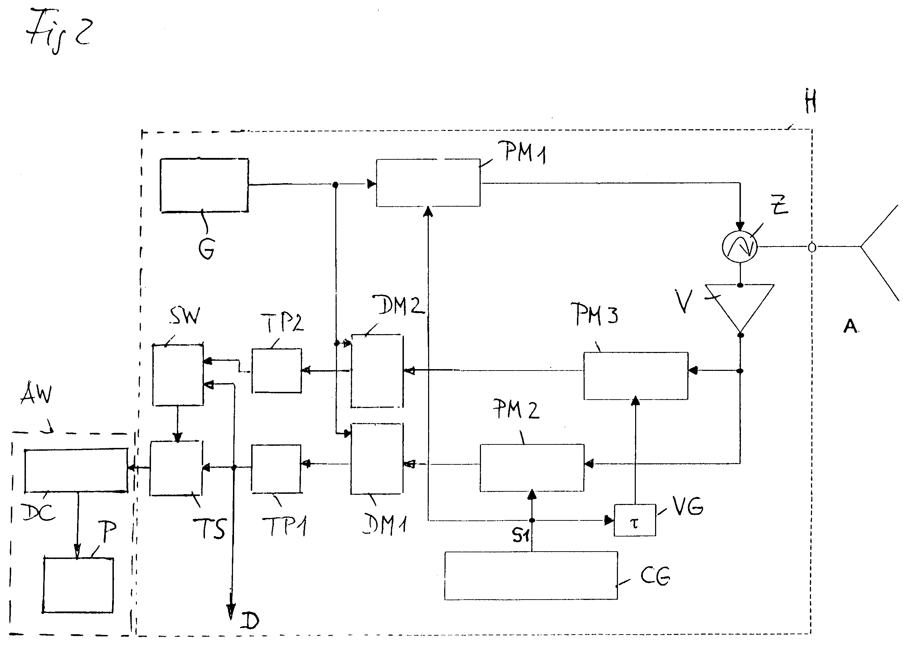

Die in Fig. 2 dargestellte Vorrichtung besitzt in ihrem HF-Modul H zwei Laufzeitfilter, die für ankommende Empfangssignale Entfernungstore darstellen, d.h. nur solche Empfangssignale durch lassen, die aus einem vorgegebenen Entfernungsbereich kommen. Die beiden Laufzeitfilter bestehen jeweils aus zwei Phasenmodulatoren PM1, PM2; PM1, PM3, jeweils einem als Demodulator arbeitenden HF-Mischer DM1, DM2, der über den jeweils zweiten Phasenmodulator eintreffende Empfangssignale mit der Frequenz des Hochfrequenzgenerators G multiplikativ mischt, und jeweils einem nachgeschalteten Tiefpaßfilter TP1, TP2. Alle Phasenmodulatoren erhalten von einem Code-Generator CG dasselbe Signal S1 als Modulationssignal.

Von den Phasenmodulatoren der Laufzeitfilter moduliert jeweils einer, der beiden Laufzeitfiltern gemeinsame Phasenmodulator PM1, das Abfragesignal, der jeweils andere von der Antenne her eintreffende Empfangssignale. Abfragesignal und Empfangssignale müssen deshalb voneinander getrennt geführt werden. Dies bewirkt der Zikulator Z, der vom Phasenmodulator PM1 kommende Abfragesignale der Antenne A zuführt und von der Antenne her eintreffende Empfangssignale über einen Verstärker V auf den zu den Phasenmodulatoren PM2 und PM3 führenden Empfangspfad schaltet.

Der zweite Phasenmodulator PM3 des zweiten Laufzeitfilters erhält das vom Code-Generator erzeugte Modulationssignal S1 über ein Verzögerungsglied VG mit einer Zeitverzögerung τ zugeführt.

Die Ausgänge der Tiefpaßfilter TP1, TP2 sind auf eine Schwellenwertschaltung SW geführt, deren Ausgang eine Torschaltung TS ansteuert, über die das Ausgangssignal des ersten Laufzeitfilters, das am Ausgang des ersten Tiefpaßfilters TP1 ansteht, auf die Auswerteeinheit AW durchgeschaltet werden kann.

Zur Abfrage eines Transponders liefert der Hochfrequenzgenerator G ein Dauerstrichsignal der Frequenz 2,5 GHz. Dieses gelangt in den ersten Phasenmodulator PM1 und wird dort mit dem vom Code-Generator CG bereitgestellten Signal S1, einem digitalen Pseudo-Zufallscode, der z. B. Phasenverschiebungen von 0° und 180° erzeugt, moduliert. Dieser Code besitzt eine Taktfrequenz von z.B. 20 MHz und hat gute Auto- und Kreuzkorrelationseigenschaften. Er kann beispielsweise eine Länge von 1023 Bit haben und im Code-Generator aus einem der Codelänge entsprechenden Datenspeicher zyklisch ausgelesen werden.

Das auf diese Weise breitbandig modulierte Abfragesignal gelangt über den Zirkulator Z auf die Antenne A, die es abstrahlt. Trifft das abgestrahlte Abfragesignal auf ein reflektierendes Objekt, so wird ein Teil der abgestrahlten Leistung auf die Antenne A zurück reflektiert und als Empfangssignal über den Zirkulator Z und den Verstärker V dem zweiten Phasenmodulator PM2 zugeführt. Dort erfolgt eine nochmalige Modulation mit dem Pseudo-Zufallscode.

Dieser ist jedoch aufgrund der zum Objekt und zurück benötigten Signallaufzeit zeitlich gegenüber dem Empfangssignal verschoben und korreliert im allgemeinen nicht mit der im ersten Phasenmodulator dem Abfragesignal aufgeprägten Modulation. Am Ausgang des Phasenmodulators PM2 erscheint ein breitbandig moduliertes HF-Signal, das am Ausgang des HF-Mischers DM 1 ein die Taktfrequenz des Code-Generators enthaltendes HF-Signal erzeugt, das den nachgeschalteten Tiefpaß TP1 nicht überwinden kann. Das reflektierte Signal wird somit von der Lesevorrichtung nicht erfaßt. Eine Erfassung erfolgt nur, wenn der Abstand zwischen Antenne A und dem reflektierenden Objekt z.B dem auszulesenden Transponder, wie in Fig. 2 vorausgesetzt, sehr klein ist, so daß die Signallaufzeit vernachlässigt werden darf, oder wenn das Modulationssignal S1 dem zweiten Phasenmodulator über ein Verzögerungsglied, um den Betrag der zu erwartenden Signallaufzeit verzögert, zugeführt wird, wie dies beim Phasenmodulator PM3 des zweiten Laufzeitfilters der Fall ist.

Entspricht nämlich die Laufzeit eines HF-Signales zum reflektierenden Objekt und zurück der Zeitverzögerung des Modulationssignals S1, so erfolgt die durch den zweiten Phasenmodulator PM2 vorgenommene zweite Modulation mit dem Pseudo-Zufallscode bis auf geringfügige Abweichungen, die sich z.B. durch Dopplerverschiebung bei bewegten Objekten ergeben können, kohärent zur ersten, im Phasenmodulator PM1 vorgenommenen Modulation, Phasenverschiebungen von 180° im Empfangssignal werden damit durch nochmalige 180°-Verschiebung rückgängig gemacht und das Empfangssignal so von seiner Phasenmodulation befreit.

Der HF-Mischer liefert nun an seinem Ausgang ein statisches oder, bei Auftreten von Dopplerverschiebung, ein sehr niederfrequentes Signal, das über den Tiefpaß TP1 auf eine in der Figur nicht dargestellte Anzeigeeinrichtung D gelangt. Das Objekt wird somit erfaßt.

Ist das Objekt ein auf das Abfragesignal abgestimmter Transponder, so erscheint die im Transponder aufgeprägte Modulation, z. B. eine Tastung des reflektierten Signals im Frequenzbereich von 20 bis 400 KHz ebenfalls am Ausgang des HF-Mischers. Von dort gelangt sie als relativ niederfrequentes Signal über den Tiefpaß TP1 zu der die Erfassung signalisierenden Anzeigeeinrichtung D und über die Torschaltung TS zur Auswerteeinheit AW. In der Auswerteeinheit wird die im Transponder aufgeprägte Modulation in einem Decodierer DC decodiert und einem Prozessor P zur Weiterverarbeitung zugeführt.

Das zweite Laufzeitfilter in Fig. 2 arbeitet wie das erste Laufzeitfilter, mit dem Unterschied, daß es, infolge einer um die Zeit τ verzögerten Zuführung des Modulationssignals S1 zum Phasenmodulator PM3 Empfangssignale erfaßt, die von weiter entfernten Objekten oder Transpondern stammen als die, die über das erste Laufzeitfilter erfaßt werden. Das zweite Laufzeitfilter liefert auch kein Ausgangssignal an die Anzeigeeinrichtung oder die Auswerteeinheit.

Sein Ausgangssignal beeinflußt nur die Schwellenwertschaltung SW und hat dort die Wirkung, daß die Torschaltung TS für Ausgangssignale des Tiefpasses TP1 gesperrt wird, sobald sein Pegel den des Tiefpasses TP1 übersteigt. Anstelle des Pegels des Tiefpasses TP1, der hier als Referenzsignal verwendet wird, lassen sich auch andere, z. B. voreingestellte Festpegel als Referenzsignale verwenden.

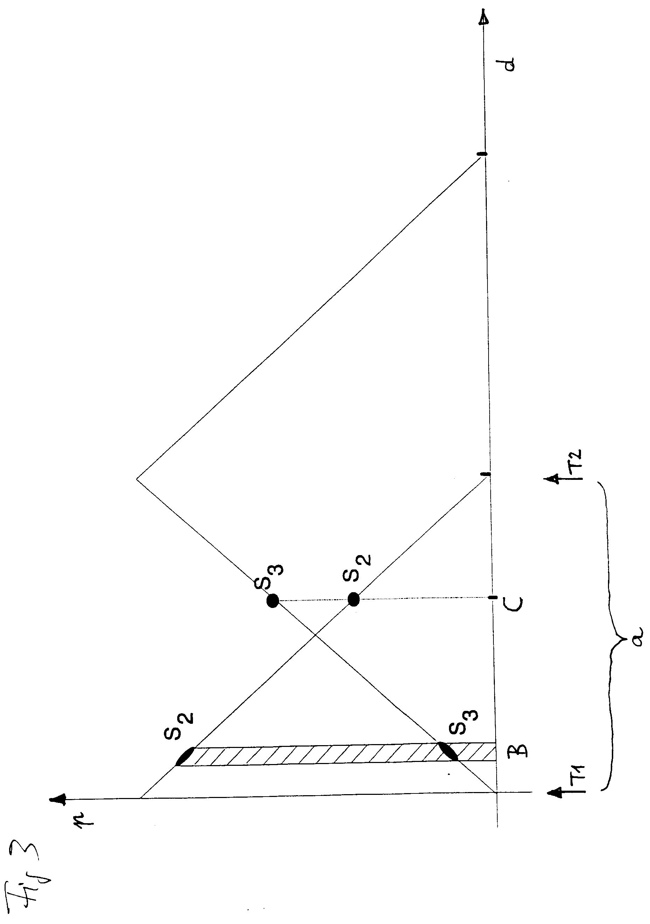

In Fig. 3 sind schematisch die Pegel der Ausgangssignale zweier Laufzeitfilter einer Auslesevorrichtung in Abhängigkeit von der Entfernung d eines auszulesenden Transponders angegeben. Die Laufzeitfilter bilden hier Entfernungstore für zwei Entfernungszonen: eine Zentralzone, die die nächste Umgebung eines Transponders T1 abdeckt, über den die Auslesevorrichtung, die z. B. an einem spurgebundenen Fahrzeug befestigt sein kann, hinweggeführt wird, und eine Entfernungszone, die die Zentralzone ringförmig umgibt und in einer Entfernung a vom Transponder T1 ein maximales Signal liefert.

Das erste Laufzeitfilter liefert in der Nähe des Transponders T1 - in der Figur im schraffierten Bereich B - ein Signal S2 mit hohem Pegel, das zweite Laufzeitfilter liefert dort nur ein sehr schwaches Signal S3. Das Signal S2 ist im schraffierten Bereich deshalb nicht maximal, weil die Signallaufzeit zwischen der z.B. an einem Eisenbahnfahrzeug befestigten Auslesevorrichtung und dem z. B. im Gleis verlegten Transponder T1, die hier zwar klein, jedoch nicht null ist, hier nicht durch Verzögerung des dem zweiten Phasenmodulator des ersten Laufzeitgliedes zugeführten Modulationssignals exakt kompensiert wird.

Da der Pegel des Signals S2 im schraffierten Bereich B wesentlich höher als der des Signals S3 ist, ist die Torschaltung TS in Fig. 2 durchlässig geschaltet und das Signal S2 wird ausgewertet.

Entfernt sich die Auslesevorrichtung vom Ort des Transponders T1, so gelangt der Transponder mehr und mehr in den Bereich des vom zweiten Laufzeitfilters gebildeten Entfernungstores. So überwiegt am Ort C in Fig. 3 bereits das Ausgangssignal S3 des zweiten Laufzeitfilters das vom ersten Laufzeitfilter gelieferte Signal S2. Die Schwellenwertschaltung sperrt somit die Torschaltung TS und das Signal S2 kann nicht mehr zur Auswerteeinheit gelangen.

Das Signal S3 bleibt auch dann stets größer als das Signal S2, wenn die Auslesevorrichtung noch weiter weg vom Transponder T1 bis in einen Bereich bewegt wird, in dem aus Reichweitegründen kein Empfangssignal mehr aufgenommen werden kann.

Befindet sich ein weiterer Transponder T2 in einem Abstand a zu der Linie, auf der die Auslesevorrichtung bewegt wird und auf der auch der Transponder T1 liegt - dieser Fall ist z. B. gegeben, wenn in einem ersten Gleis einer Eisenbahnstrecke der Transonder T1 und im Nachbargleis, gegen den Transponder T1 versetzt, ein Transponder T2 verlegt ist - so wird auch hier, infolge der Entfernung des Transponders T2 von der Auslesevorrichtung, das Signal S3 des zweiten Laufzeitfilters immer höher sein als das des ersten Laufzeitfilters. Es wird deshalb nicht zur Auswertung von vom Transponder T2 stammender Information kommen. Im Falle daß die Transponder T1 und T2 auf gleicher Höhe in den Gleisen angeordnet sind, überwiegt das Signal S2 des Transponders T1 das aufgrund der größeren Entfernung des Transponders T2 von der Auslesevorrichtung schwächer einfallende Signal S3 auch dann, wenn dieses am Ausgang des zweiten Laufzeitfilters mit maximalem Pegel ansteht.

In Fig. 4 ist auf der linken Seite eine Vorrichtung wiedergegeben, die sich zu Empfang und Auswertung von in ihrer Frequenz gegenüber der Frequenz des Abfragesignals verschobenen Empfangssignalen eignet.

Ein in Fig. 4, rechts, schematisch wiedergegebener Transponder T enthält einen Phasenschieber PH, der von einem Generator TG mit einer Taktfrequenz versorgt wird, die eine Frequenzverschiebung im reflektierten Abfragesignal verursacht. Ein Modulator M steuert den Phasenschieber entsprechend einem in einem Festwertspeicher des Transponders gespeicherten Code, so daß die verschobene Frequenz im Takt dieses Codes abgegeben wird. Der Betrag der Frequenzverschiebung ist so groß, daß die verschobene Frequenz einerseits getrennt von der Abfragefrequenz verarbeitet werden kann, andererseits aber mit derselben Antenne, mit der das Abfragesignal ausgesendet wird, empfangen werden kann. Die in Fig. 4 dargestellte Vorrichtung unterscheidet sich von der oben beschriebenen Vorrichtung der Fig. 2 vor allem darin, daß den beiden Demodulatoren DM3 und DM4 hier Bandpaßfilter BP1, BP2 anstelle von Tiefpaßfiltern nachgeschaltet sind. Zur Auswertung des Transpondersignals wird das Ausgangssignal des ersten Laufzeitfilters, das dem ersten Bandpaß BP1 entnommen wird, einem weiteren Demodulator QM zugeführt, der von einem Oszillator angesteuert wird, dessen Frequenz der im Transponder erzeugten Frequenzverschiebung entspricht. Realteil und Imaginärteil des demodulierten Signals werden über einen Analog/Digital-Wandler einem Signalprozessor DSP in der Auswerteeinheit AW zugeführt. Die Ausgangssignale beider Bandpässe werden außerdem einem Umschalter SW1 zugeführt, der sie abwechselnd ebenfalls auf den Signalprozessor der Auswerteeinheit weiterschaltet. Im Signalprozessor der Auswerteeinheit wird erstens festgestellt, ob der Pegel des Ausgangssignals des zweiten Laufzeitfilters den Pegel des Ausgangssignals des ersten Laufzeitfilters übersteigt und somit die Auswertung des Empfangssignales unterbunden werden muß. Zweitens werden die Pegelmaxima der Ausgangssignale beider Laufzeitfilter ermittelt und die Zeitpunkte ihres Eintreffens festgehalten. Letzteres ermöglicht, den Zeitpunkt des Passierens eines Transponders und damit z.B. das Vorbeifahren eines den Transponder tragenden Fahrzeuges an einem durch das Abfragegerät markierten Ort zeitlich festzuhalten.

Soll die in Fig. 4 dargestellte Vorrichtung auch reflektierende Gegenstände erfassen, die keinen Transponder tragen, so muß parallel zum Bandpaß BP1 des ersten Laufzeitfilters ein Tiefpaß TP3 vorgesehen werden, dem an einem Ausgang D ein Erfassungssignal entnommen werden kann.

## Patentansprüche

1. Vorrichtung zum Erfassen und Auslesen von relativ zu dieser Vorrichtung beweglichen Transpondern (T), die codierte Information tragen, mit einer Sende- und Empfangseinheit (H), die ein hochfrequentes Abfragesignal über eine Antenne (A) abstrahlt und ein von einem auf die Frequenz des Abfragessignals abgestimmten Transponder (T) entsprechend dessen codierter Information modulierten, auf derselben Frequenz oder einer zum Zwecke der Unterdrückung unerwünschter Reflexionen auf einer gegenüber der Frequenz des Abfragesignals verschobenen Frequenz reflektierten Anteil dieses Abfragesignals als Empfangssignal aufnimmt, diesen demoduliert und das demodulierte Signal einer Auswerteeinheit (AW) zur Decodierung und Auswertung zuführt,
**dadurch gekennzeichnet**, daß die Sende- und Empfangseinheit ein Laufzeitfilter enthält, das ein empfangenes Signal nur dann zur Auswerteeinheit (AW) weiterleitet, wenn dieses innerhalb eines vorgegebenen Zeitfensters nach Aussenden des Abfragesignals eingetroffen ist.

2. Vorrichtung nach Anspruch 1,
dadurch gekennzeichnet, daß das Laufzeitfilter zwei Phasenmodulatoren enthält, denen als Modulationssignal ein von einem Code-Generator erzeugter charakteristischer Code zugeführt wird, daß der erste Phasenmodulator im Sendepfad der Sende- und Empfangseinheit, der zweite Phasenmodulator in einem Empfangspfad der Sende- und Empfangseinheit angeordnet ist und beide Phasenmodulatoren ihnen zugeführte Signale entsprechend dem charakteristischen Code zwischen 0° und 180° in der Phase umtasten, daß dem zweiten Phasenmodulator das Modulationssignal über ein Verzögerungsglied zugeführt wird, dessen Zeitverzögerung der Summe der Laufzeiten des Abfragesignals und des Empfangssignals auf der Strecke zwischen auslesender Vorrichtung und Transponder entspricht und, daß dem zweiten Phasenmodulator ein mit der Frequenz des Abfragesignals als Referenzfrequenz betriebener Hochfrequenzmischer und ein Tiefpaß in Reihe nachgeschaltet sind.

3. Vorrichtung nach Anspruch 2,
dadurch gekennzeichnet, daß der Ausgang des Tiefpasses des Laufzeitfilters mit einer Anzeigeeinrichtung verbunden ist, die die Anwesenheit eines Transponders oder eines das Abfragesignal reflektierenden Objektes anzeigt.

4. Vorrichtung nach Anspruch 2 oder Anspruch 3,
dadurch gekennzeichnet, daß die Sende- und Empfangseinheit weitere Laufzeitfilter enthält, die jeweils aus dem im Sendepfad angeordneten ersten Phasenmodulator (PM1) und einem weiteren, dem zweiten Phasenmodulator (PM2) parallel geschalteten oder in einem weiteren Empfangspfad liegenden Phasenmodulator (PM3) und diesem nachgeschalteten Hochfrequenzmischer (DM2) und Tiefpaß (TP 2) gebildet sind, wobei das Modulationssignal für den weiteren Phasenmodulator über ein weiteres Verzögerungsglied (VG) zugeführt wird, dessen Zeitverzögerung (τ) kleiner oder größer als die Summe der Laufzeiten des Abfragesignals und des Empfangssignals auf der Strecke zwischen auslesender Vorrichtung und Transponder ist.

5. Vorrichtung nach einem der Patentansprüche 2 bis 4,
dadurch gekennzeichnet, daß der charakteristische Code ein digitaler Pseudo-Zufallscode ist.

6. Vorrichtung nach Patentanspruch 5,
dadurch gekennzeichnet, daß die Taktfrequenz des charakteristischen Codes kleiner als ein Drittel der Frequenz des Abfragesignals ist und, daß der Kehrwert der Taktfrequenz der Durchlaßbreite des ersten Laufzeitfilters entspricht.

7. Vorrichtung nach einem der vorstehenden Ansprüche,
dadurch gekennzeichnet, daß zum Aussenden des Abfragesignals und zum Aufnehmen des Empfangssignals dieselbe Antenne (A) vorgesehen ist und daß der Antenne ein Zirkulator (Z) vorgeschaltet ist, der das Abfragesignal und in Gegenrichtung laufende Empfangssignale voneinander trennt.

8. Vorrichtung nach einem der Ansprüche 4 bis 7,
dadurch gekennzeichnet, daß eine Schwellenwertschaltung (SW) vorgesehen ist, deren Steuereingang mit den Ausgängen der Tiefpaßfilter (TP2) der weiteren Laufzeitfilter verbunden ist, daß der Ausgang der Schwellenwertschaltung (SW) auf einen Steuereingang einer Torschaltung (TS) geführt ist, über die das am Ausgang des ersten Tiefpaßfilters anstehende Ausgangssignal des ersten Laufzeitfilters auf die Auswerteschaltung (AW) durchschaltbar ist und nur dann durchgeschaltet wird, wenn kein anderes Laufzeitfilter am Ausgang seines Tiefpaßfilters (TP2) ein Signal liefert, dessen Pegel höher ist als ein vorgegebener Schwellenwert.

9. Vorrichtung nach Anspruch 8,
dadurch gekennzeichnet, daß als vorgegebener Schwellenwert das Ausgangssignal des ersten Laufzeitfilters dient und der Ausgang des Tiefpasses (TP 1) des ersten Laufzeitfilters hierzu mit einem Referenzspannungseingang der Schwellenwertschaltung verbunden ist.

10. Vorrichtung nach einem der Ansprüche 1 bis 3,
dadurch gekennzeichnet, daß zur Gewinnung des Ausgangssignals des Laufzeitfilters bei Empfang von in ihrer Frequenz gegenüber der Frequenz des Abfragesignals verschobenen Empfangssignalen anstelle eines Tiefpaßfilters ein Bandpaßfilter vorgesehen ist, dessen Durchlaßfrequenz der Frequenzverschiebung entspricht und daß das Ausgangssignal des Bandpaßfilters über einen weiteren Demodulator, der von einem mit der Verschiebungsfrequenz schwingenden Oszillator angesteuert wird, der Auswerteeinheit zugeführt wird.

11. Vorrichtung nach einem der Ansprüche 4 bis 9,
dadurch gekennzeichnet, daß zur Gewinnung der Ausgangssignale der Laufzeitfilter bei Empfang von in ihrer Frequenz gegenüber der Frequenz des Abfragesignals verschobenen Empfangssignalen anstelle von Tiefpaßfiltern Bandpaßfilter (BP1, BP2) vorgesehen sind, deren Durchlaßfrequenzen der Frequenzverschiebung entsprechen, daß dem Ausgang des ersten Laufzeitfilters ein weiterer Demodulator (QM) nachgeschaltet ist, der von einem mit der Verschiebungsfrequenz schwingenden Oszillator (G1) angesteuert wird und über den das Ausgangssignal des ersten Laufzeitfilters der Auswerteeinheit (AW) zugeführt wird, und daß die Ausgänge beider Laufzeitfilter auf einen Umschalter (SW1) geführt sind, welcher die anstehenden Ausgangssignale wechselweise auf die Auswerteeinheit durchschaltet und daß die Auswerteeinheit neben einer Torschaltungsfunktion, die eine Auswertung des Ausgangssignales des ersten Laufzeitfilters verhindert, sobald der Pegel des Ausgangssignals des zweiten Laufzeitfilters den des Ausgangssignals des ersten Laufzeitfilters übersteigt, eine Maximumlokalisierung vornimmt, bei der die Zeitpunkte ermittelt und festgehalten werden, zu denen die Ausgangssignale der einzelnen Laufzeitfilter maximale Pegel erreichen.

12. Verwendung einer Vorrichtung nach einem der vorstehenden Patentansprüche zum selektiven Aus lesen einzelner, in vorgegebener Entfernung befindlicher Transponder, insbesondere von Transpondern, die an auf unterschiedlichen Fahrspuren einer Straße befindlichen Fahrzeugen befestigt sind.

13. Verwendung einer Vorrichtung nach einem der Patentansprüche 1 bis 11 in einem Verkehrssystem mit spurgebundenen Fahrzeugen und mit entlang von Fahrspuren angeordneten, Streckeninformation auf Fahrzeuge, die die Fahrspuren benutzen, übertragenden Transpondern, zum Ausblenden von Störungen und Signalen, die von Transpondern außerhalb einer jeweils benutzten Fahrspur abgegeben werden.
